# EUROPÄISCHE PATENTANMELDUNG

(11) **EP 3 701 803 A1**
(43) Veröffentlichungstag der Anmeldung: **02.09.2020**
(21) Anmeldenummer: 19160043.6
(22) Anmeldetag: 28.02.2019
(51) Int. Cl.: A23L 2/02, A23F 3/16, A23F 3/34

(54) **VERFAHREN ZUR HERSTELLUNG EINES KONZENTRIERTEN AUFGUSSES IN VERPACKTER FORM FÜR EINEN GEKÜHLTEN TEE ODER EIN GEKÜHLTES TEEÄHNLICHES GETRÄNK**

(71) Anmelder: Hanseatic Tea Export GmbH, 28217 Bremen (DE)
(72) Erfinder: JANECKI, Ralf, 28217 Bremen (DE)
(74) Vertreter: Eisenführ Speiser

(57) **Zusammenfassung**

Die Erfindung betrifft ein Verfahren zur Herstellung eines konzentrierten Aufgusses. Bei dem Verfahren wird aus Pflanzenmaterial ein konzentrierter Aufguss hergestellt, ohne dass eingeengt wird. Der konzentrierte Aufguss wird zur Herstellung von gekühlten Getränken verwendet.

## Beschreibung

Die vorliegende Erfindung betrifft ein Verfahren zur Herstellung eines konzentrierten Aufgusses in verpackter Form und den konzentrierten Ausguss in verpackter Form. Zudem betrifft die Erfindung ein Verfahren zur Herstellung eines gekühlten Tees oder eines gekühlten teeähnlichen Getränks sowie ein Kit für dieses Verfahren.

Konzentrierte Aufgüsse für die Herstellung von gekühlten Tees oder gekühlten teeähnlichen Getränken sind bekannt. Beispielsweise können Tee-Extrakte in Pulverform (sog. "Löslicher Tee" oder "Instanttee") verwendet und mit kaltem Wasser zu einem trinkfertigen Produkt verdünnt werden. Instanttee in Pulverform wird üblicherweise hergestellt, indem Teeblätter gebrüht werden und ein wässriger Teeaufguss gewonnen wird, der dann durch Einengen aufkonzentriert und sprühgetrocknet wird. Derartige Produkte enthalten außer dem pulverisierten Tee-Extrakt (der Anteil beträgt typischerweise etwa 10 Gramm pro Liter fertiges Getränk) üblicherweise noch Zucker, Dextrose oder Süßstoffe, sowie Aromastoffe und Stabilisatoren. Da sich in Tee-Extrakten aus Teeflavinen, Teerubigenen und Koffein beim Abkühlen schwerlösliche Niederschläge bilden, sind je 1 kg kaltwasserlöslichem Tee-Extrakt typischerweise bis zu 100 g Kalium- oder Natriumhydroxid beigemischt.

Allerdings unterscheiden sich aus Instanttees hergestellte Getränke wegen der Herstellung der Instanttees (insbesondere den Schritten Einengen und Sprühtrocknen) deutlich in Geruch und Geschmack von frisch gebrühten Tees. Auch die zwingend vorhandenen Hilfsstoffe, die dem Instanttee zugefügt werden müssen, um das Auflösen in Wasser zu erleichtern, ändern Geruch und Geschmack des fertigen Getränks unerwünscht.

In der WO 2016/004285 A1 ist offenbart, dass ein wasserarmes Kaffee- oder Teekonzentrat hergestellt werden kann, welches eine bessere Lager- sowie Geruchs- und Geschmacksstabilität besitzt, indem sprühgetrocknetem Kaffee- oder Teepulver beispielsweise Fruktosesirup und Glycerin hinzugefügt werden. Auch hier sind also Hilfsstoffe zwingend vorgeschrieben.

Aus der US2002/197379A1 ist bekannt, dass man diejenigen Bestandteile von Tee, die sich zwar in heißem, jedoch nicht in kaltem Wasser lösen, besser in Lösung halten kann, indem anionisches kolloidales Material zugefügt wird, beispielsweise Karamel. Bei dem Verfahren gemäß US2002/197379A1 werden Teeblätter mit Wasser extrahiert und der Teeextrakt wird von Blättern befreit und aufkonzentriert. Danach wird das anionische kolloidale Material zugefügt, daraufhin Feinstoffe entfernt und nochmals aufkonzentriert. Das erhaltene Konzentrat kann mit Wasser verdünnt werden, um ein trinkfertiges Produkt zu erhalten, oder sprühgetrocknet werden. Zum einen sind derartige Konzentrate unbefriedigend, weil die mehreren Aufkonzentrierschritte den Geruch und den Geschmack des durch Verdünnen erhaltenen Getränks beeinträchtigen. Zum anderen sind Konzentrate mit einem zwangsläufigen Gehalt an kalorienhaltigem Karamel unerwünscht.

Außerdem gibt es handelsübliche, direkt gebrühte Tees und teeähnliche Produkte, die mit einem üblichen Volumen Aufgusswasser gebrüht worden sind und die direkt gekühlt oder mit Eiswürfeln versetzt werden können, um ein gekühltes Getränk herzustellen. Allerdings ist Kühlen zeitaufwendig. Demgegenüber führt zwar das Hinzufügen von Eiswürfeln zu einem schnelleren Abkühlvorgang, allerdings sind die erhaltenen Produkte verdünnt und deshalb im Geschmack unbefriedigend.

Der vorliegenden Erfindung hat die Aufgabe zugrunde gelegen, die Probleme im Stand der Technik zu überwinden und einen verbesserten Aufguss zur Verfügung zu stellen, der mit optionalen Bestandteilen und vielfältig gemischt werden kann und der sich letztendlich bei Bereitstellung als gekühltes Getränk in Geruch und Geschmack nur unwesentlich von frisch aufgebrühtem Tee unterscheidet. Bei dem Verfahren zur Herstellung des Aufgusses sollen also keine zwangsläufig zu verwendenden Zusätze zum Einsatz kommen, die lediglich der Durchführung des Verfahrens dienen, die gleichzeitig aber den Geruch oder den Geschmack des Aufgusses und des daraus hergestellten Getränks (oder irgendeine andere Eigenschaft, wie die Farbe des fertigen Getränks) bestimmen oder mitbestimmen.

Es hat sich nun überraschenderweise herausgestellt, dass diese Aufgabe durch das erfindungsgemäße Verfahren zur Herstellung eines konzentrierten Aufgusses in verpackter Form gelöst wird, bei dem
a. getrocknetes Pflanzenmaterial mit Wasser bei einer Temperatur im Bereich von 70 °C bis 100 °C aufgegossen wird, wobei die eingesetzte Masse Pflanzenmaterial je Liter Aufgusswasser (x) höher ist als die für das Pflanzenmaterial übliche Masse (y), und durch Abtrennen von Satz ein konzentrierter Aufguss erhalten wird,
b. der konzentrierte Aufguss gegebenenfalls mit einem oder mehreren weiteren Inhaltsstoffen formuliert wird, um einen gegebenenfalls formulierten, konzentrierten Aufguss zu erhalten,
c. der gegebenenfalls formulierte, konzentrierte Aufguss gegebenenfalls filtriert wird und
d. der gegebenenfalls filtrierte, gegebenenfalls formulierte, konzentrierte Aufguss in eine Verpackung abgefüllt wird,
wobei das Verfahren keinen Wasserentzug einschließt.

Die Erfindung beruht unter anderem darauf, dass überraschenderweise gefunden wurde, dass ein konzentrierter Aufguss aus Pflanzenmaterial hergestellt werden kann, der sich beim Verdünnen mit Wasser hinsichtlich Geruch, Geschmack und weiteren Eigenschaften von frisch aufgebrühtem Tee oder teeähnlichen Getränken nicht oder nicht wesentlich unterscheidet, und zwar ohne dass zwingend Hilfsstoffe eingesetzt werden müssen. Bei dem erfindungsgemäßen Verfahren wird kein Wasser entzogen. Dies stellt sicher, dass Geruch und Geschmack des fertigen Produkts nicht verändert werden.

### Detaillierte Beschreibung der Erfindung

In einem ersten Aspekt betrifft die Erfindung das Verfahren zur Herstellung eines konzentrierten Aufgusses in verpackter Form, bei dem
a. getrocknetes Pflanzenmaterial mit Wasser bei einer Temperatur im Bereich von 70 °C bis 100 °C aufgegossen wird, wobei die eingesetzte Masse Pflanzenmaterial je Liter Aufgusswasser (x) höher ist als die für das Pflanzenmaterial übliche Masse (y), und durch Abtrennen von Satz ein konzentrierter Aufguss erhalten wird,
b. der konzentrierte Aufguss gegebenenfalls mit einem oder mehreren weiteren Inhaltsstoffen formuliert wird, um einen gegebenenfalls formulierten, konzentrierten Aufguss zu erhalten,
c. der gegebenenfalls formulierte, konzentrierte Aufguss gegebenenfalls filtriert wird und
d. der gegebenenfalls filtrierte, gegebenenfalls formulierte, konzentrierte Aufguss in eine Verpackung abgefüllt wird,
wobei das Verfahren keinen Wasserentzug einschließt.
a. Im ersten Schritt des Verfahrens wird das Pflanzenmaterial mit Wasser aufgegossen. Dafür wird typischerweise so vorgegangen, dass in einem großen Tank Wasser zu den Pflanzenmaterial gegeben wird und sich der Aufguss bildet.
   Bei dem erfindungsgemäßen Verfahren wird in Schritt a. eine Masse Pflanzenmaterial je Liter Aufgusswasser (x) eingesetzt, die höher ist als die für das Pflanzenmaterial übliche Masse Pflanzenmaterial je Liter Aufgusswasser (y). Vorzugsweise liegt das Massenverhältnis (x) : (y) in Schritt a. im Bereich von 2:1 bis 8:1, wobei (x) : (y) bevorzugter im Bereich von 3:1 bis 7:1 liegt, insbesondere im Bereich von 4:1 bis 6:1, wie bei etwa 5:1.
   Nach Kontakt des Pflanzenmaterials mit dem heißen Aufgusswasser für einen bestimmten Zeitraum wird ein konzentrierter Aufguss erhalten, indem Satz abgetrennt wird.
b. Im zweiten Schritt des Verfahrens wird der konzentrierte Aufguss gegebenenfalls mit einem oder mehreren weiteren Inhaltsstoffen formuliert, um einen gegebenenfalls formulierten, konzentrierten Aufguss zu erhalten.
c. Im dritten Schritt des Verfahrens wird der gegebenenfalls formulierte, konzentrierte Aufguss gegebenenfalls filtriert. Für diesen Schritt wird vorzugsweise über einen Feinfilter (mit einer Maschenweite von 10 bis 100 µm, vorzugsweise 25 bis 75 µm, wie etwa 50 µm) geschoben, vorzugsweise in die Ausmischtanks. Danach wird vorzugsweise im geschlossenen System (Tanks, Leitung, Abfüllmaschine) gearbeitet.
d. Im vierten Schritt des Verfahrens wird der gegebenenfalls filtrierte, gegebenenfalls formulierte, konzentrierte Aufguss in eine Verpackung abgefüllt. Dafür wird der Aufguss vorzugsweise von oben in die noch offene Packung gefüllt.

Vorzugsweise sind die üblichen weiteren Inhaltsstoffe ausgewählt aus Konzentraten, Grundstoffen, Säften, Zucker und Wasser.

Vorzugsweise liegt die Größe der Verpackung im Bereich von 200 ml bis 20 l, bevorzugter im Bereich von 400 ml bis 1,5 l, insbesondere 800 ml bis 1,3 l, wie bei etwa 1 l.

Die Verpackung ist vorzugsweise eine Flasche aus Glas oder Kunststoff oder ein Getränkekarton, wobei als Behälter ein Getränkekarton besonders bevorzugt ist, der kunststofflaminierten Karton umfasst.

Bei der Abfüllung in einen Getränkekarton wird typischerweise so vorgegangen, dass die Packung - zunächst noch nach oben offen - hergestellt und der Deckel per Ultraschall eingesiegelt wird. Die oben offene Packung läuft dann weiter; wird befüllt; danach wird der Karton oben verschweisst und der Giebel wird gefaltet, um die Verpackung fertigszustellen.

Das Pflanzenmaterial ist bevorzugt ausgewählt aus Tee (*Camellia sinensis*), Früchten und Kräutern, wobei das Pflanzenmaterial vorzugsweise ausgewählt ist aus Tee, Hibiskus, Hagebutteschalen, Apfel, Pfefferminze, Kamille, Holunderbeeren, Zitronenschalen, Rooibush und Verbena. Es können selbstverständlich auch Mischungen von verschiedenen Pflanzenmaterialien verwendet werden, und zwar beispielsweise Mischungen von Pflanzenmaterialien verschiedener Pflanzensorten, oder Mischungen von verschiedenen Pflanzenmaterialien einer bestimmten Pflanzensorte.

In einer ersten Ausführungsform handelt es sich bei dem Pflanzenmaterial um Tee (*Camellia Sinensis*). Herkömmlich werden bis 10 g Trockenmaterial pro Liter Aufgusswasser eingesetzt. Bei dem erfindungsgemäßen Verfahren wird, wenn Tee eingesetzt wird, wobei grüner, schwarzer oder weißer Tee eingesetzt werden können, stattdessen mit einer Masse von mehr als 10 g Trockenmaterial pro Liter Aufgusswasser gearbeitet, vorzugsweise mit einer Masse von 15 g Trockenmaterial oder mehr pro Liter Aufgusswasser, insbesondere mit einer Masse von 20 bis 40 g Trockenmaterial pro Liter Aufgusswasser, wie 22 bis 30 g Trockenmaterial pro Liter Aufgusswasser, beispielsweise etwa 25 g Trockenmaterial pro Liter Aufgusswasser.

In einer zweiten Ausführungsform handelt es sich bei dem Pflanzenmaterial um Früchte. Herkömmlich werden bis 14 g Trockenmaterial pro Liter Aufgusswasser eingesetzt. Bei dem erfindungsgemäßen Verfahren wird, wenn Früchte eingesetzt werden, stattdessen mit einer Masse von mehr als 14 g Trockenmaterial pro Liter Aufgusswasser gearbeitet, vorzugsweise mit einer Masse von 20 g Trockenmaterial oder mehr pro Liter Aufgusswasser, insbesondere mit einer Masse von 30 bis 70 g Trockenmaterial pro Liter Aufgusswasser, wie 40 bis 60 g Trockenmaterial pro Liter Aufgusswasser, beispielsweise etwa 50 g Trockenmaterial pro Liter Aufgusswasser.

In einer dritten Ausführungsform handelt es sich bei dem Pflanzenmaterial um Kräuter. Herkömmlich werden bis 9 g Trockenmaterial pro Liter Aufgusswasser eingesetzt. Bei dem erfindungsgemäßen Verfahren wird, wenn Kräuter eingesetzt werden, stattdessen mit einer Masse von mehr als 9 g Trockenmaterial pro Liter Aufgusswasser gearbeitet, vorzugsweise mit einer Masse von 16 g Trockenmaterial oder mehr pro Liter Aufgusswasser, insbesondere mit einer Masse von 20 bis 40 g Trockenmaterial pro Liter Aufgusswasser, wie 25 bis 35 g Trockenmaterial pro Liter Aufgusswasser, beispielsweise etwa 30 g Trockenmaterial pro Liter Aufgusswasser.

Vorzugsweise wird der gegebenenfalls filtrierte, gegebenenfalls formulierte, konzentrierte Aufguss bei einer Temperatur von 75°C bis 93° C, vorzugsweise 80°C bis 90° C, insbesondere 85°C bis 87° C, zum Abfüllen d. vorgelegt und in den Behälter gegeben, und der Behälter wird dann verschlossen.

In einem zweiten Aspekt betrifft die Erfindung den gegebenenfalls filtrierten, gegebenenfalls formulierten, konzentrierten Aufguss in verpackter Form, herstellbar gemäß dem Verfahren gemäß dem ersten Aspekt.

In einem dritten Aspekt betrifft die Erfindung ein Verfahren zur Herstellung eines gekühlten Getränks, bei dem die Verpackung des gegebenenfalls filtrierten, gegebenenfalls formulierten, konzentrierten Aufgusses gemäß dem zweiten Aspekt geöffnet und der Aufguss mit Wasser verdünnt wird. Es ist bevorzugt, dass der gegebenenfalls filtrierte, gegebenenfalls formulierte, konzentrierte Aufguss auf das dreibis achtfache Volumen verdünnt wird, vorzugsweise auf das vier- bis sechsfache Volumen, beispielsweise auf das etwa fünffache Volumen. Es kann beispielsweise mit gekühltem Wasser verdünnt werden, oder mit Wasser, das Stücke von Wassereis enthält (Eiswasser).

In einem vierten Aspekt betrifft die Erfindung ein Kit für das Verfahren gemäß dem dritten Aspekt, umfassend den gegebenenfalls filtrierten, gegebenenfalls formulierten, konzentrierten Aufguss in verpackter Form, und ein oder mehrere Trinkbehälter, vorzugsweise in einer Grüße von 0,2 bis 1 l.

Es ist bevorzugt, dass der Kit zusätzlich eine Abgabevorrichtung (Dispenser) umfasst. Vorzugsweise umfasst der Kit ferner ein oder mehrere Messgefäße. Es ist auch bevorzugt, dass der Kit ferner ein oder mehrere Rezeptbücher, einen oder mehrere Tischaufsteller und/oder ein oder mehrere Werbemittel umfasst.

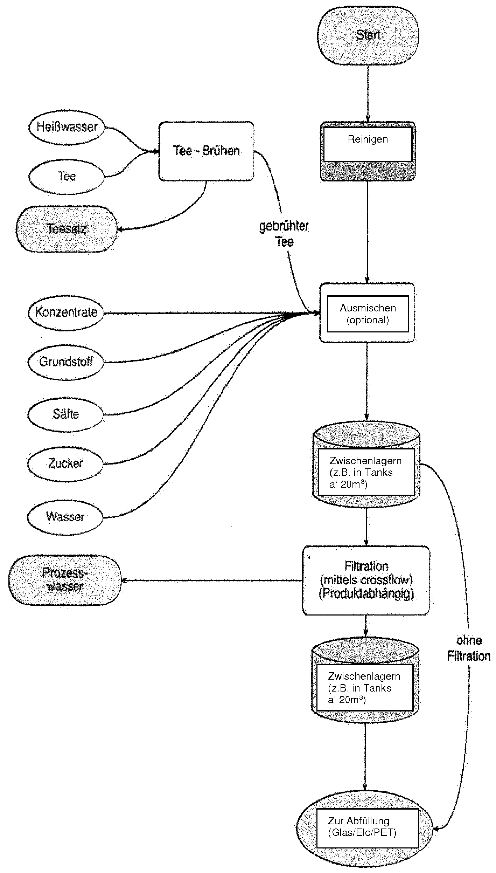

Bei der in Fig. 1 gezeigten Ausführungsform der Erfindung wird aus heißem Wasser und Tee durch Brühen und nachfolgendes Abtrennen von Teesatz ein konzentrierter Aufguss hergestellt und in einen gereinigten Mischbehälter überführt. In diesem Mischbehälter wird der konzentrierte Aufguss gegebenenfalls mit Konzentraten, Grundstoffen, Säften, Zucker und Wasser gemischt, um den gegebenenfalls formulierten, konzentrierten Aufguss zu erhalten, der vor dem Abfüllen gelagert wird. Vorteilhafterweise und in Abhängigkeit von dem für die Herstellung verwendeten Pflanzenmaterial wird der gegebenenfalls formulierte, konzentrierte Aufguss einer Filtration unterworfen; eine solche Filtration ist jedoch nicht zwingend. Letztendlich wird der gegebenenfalls filtrierte, gegebenenfalls formulierte, konzentrierte Aufguss zur Abfüllung geführt.

## Patentansprüche

1. Verfahren zur Herstellung eines konzentrierten Aufgusses in verpackter Form, bei dem
a. getrocknetes Pflanzenmaterial mit Wasser bei einer Temperatur im Bereich von 70 °C bis 100 °C aufgegossen wird, wobei die eingesetzte Masse Pflanzenmaterial je Liter Aufgusswasser (x) höher ist als die für das Pflanzenmaterial übliche Masse (y), und durch Abtrennen von Satz ein konzentrierter Aufguss erhalten wird,
b. der konzentrierte Aufguss gegebenenfalls mit einem oder mehreren weiteren Inhaltsstoffen formuliert wird, um einen gegebenenfalls formulierten, konzentrierten Aufguss zu erhalten,
c. der gegebenenfalls formulierte, konzentrierte Aufguss gegebenenfalls filtriert wird und
d. der gegebenenfalls filtrierte, gegebenenfalls formulierte, konzentrierte Aufguss in eine Verpackung abgefüllt wird,
wobei das Verfahren keinen Wasserentzug einschließt.

2. Verfahren nach Anspruch 1, bei dem das Verhältnis (x) : (y) in Schritt a. im Bereich von 2:1 bis 8:1 liegt, wobei (x) : (y) vorzugsweise im Bereich von 3:1 bis 7:1 liegt, bevorzugter im Bereich von 4:1 bis 6:1, insbesondere bei etwa 5:1.

3. Verfahren nach einem der vorhergehenden Ansprüche, bei dem die üblichen weiteren Inhaltsstoffe ausgewählt sind aus Konzentraten, Grundstoffen, Säften, Zucker und Wasser.

4. Verfahren nach einem der vorhergehenden Ansprüche, bei dem die Größe der Verpackung im Bereich von 200 ml bis 20 l liegt, vorzugsweise im Bereich von 400 ml bis 1,5 l, insbesondere 800 ml bis 1,3 l, wie etwa 1 l.

5. Verfahren nach einem der vorhergehenden Ansprüche, bei dem die Verpackung eine Flasche aus Glas oder Kunststoff oder ein Getränkekarton ist,
wobei der Behälter vorzugsweise ein Getränkekarton ist, der kunststofflaminierten Karton umfasst.

6. Verfahren nach einem der vorhergehenden Ansprüche, bei dem das Pflanzenmaterial ausgewählt ist aus Tee (*Camellia sinensis*), Früchten und Kräutern, sowie Mischungen davon,
wobei das Pflanzenmaterial vorzugsweise ausgewählt ist aus Tee, Hibiskus, Hagebutteschalen, Apfel, Pfefferminze, Kamille, Holunderbeeren, Zitronenschalen, Rooibush und Verbena, sowie Mischungen davon.

7. Verfahren nach einem der vorhergehenden Ansprüche, bei dem der gegebenenfalls filtrierte, gegebenenfalls formulierte, konzentrierte Aufguss bei einer Temperatur von 75°C bis 93° C, vorzugsweise 80°C bis 90° C, insbesondere 85°C bis 87° C, zum Abfüllen d. vorgelegt und in den Behälter gegeben wird und der Behälter dann verschlossen wird.

8. Gegebenenfalls filtrierter, gegebenenfalls formulierter, konzentrierter Aufguss in verpackter Form, herstellbar gemäß dem Verfahren eines der vorhergehenden Ansprüche.

9. Verfahren zur Herstellung eines gekühlten Getränks, bei dem die Verpackung des gegebenenfalls filtrierten, gegebenenfalls formulierten, konzentrierten Aufgusses gemäß Anspruch 8 geöffnet und der Aufguss mit Wasser verdünnt wird.

10. Verfahren nach Anspruch 9, bei dem der gegebenenfalls filtrierte, gegebenenfalls formulierte, konzentrierte Aufguss auf das drei- bis achtfache Volumen verdünnt wird, vorzugsweise auf das vier- bis sechsfache Volumen, beispielsweise auf das etwa fünffache Volumen.

11. Kit für das Verfahren gemäß einem der Ansprüche 9 oder 10, umfassend
- den gegebenenfalls filtrierten, gegebenenfalls formulierten, konzentrierten Aufguss in verpackter Form,
- ein oder mehrere Trinkbehälter, vorzugsweise in einer Größe von 0,2 bis 1 l.

12. Kit nach Anspruch 11, das ferner umfasst
- eine Abgabevorrichtung (Dispenser).

13. Kit nach Anspruch 12 oder 13, das ferner umfasst:
- ein oder mehrere Messgefäße.

14. Kit nach einem der Ansprüche 11 bis 13, das ferner umfasst:
- ein oder mehrere Rezeptbücher, einen oder mehrere Tischaufsteller und/oder ein oder mehrere Werbemittel.
